# EUROPEAN PATENT APPLICATION

(11) **EP 1 376 337 A1**
(43) Date of publication of application: **02.01.2004**
(21) Application number: 02405486.8
(22) Date of filing: 12.06.2002
(51) Int. Cl.: G06F 9/44

(54) **Action/command/business object application framework**

(71) Applicant: Commerce One Operations, Inc., Pleasanton, CA 94588-3050 (US)
(72) Inventor: Murray, Robert, San Francisco, CA 94123 (US); Khazanov, Michael, Walnut Creek, CA 94596 (US); Eng, James S., Antioch, CA 94509 (US); Brown, Jim, Walnut Creek, CA 94598 (US)
(74) Representative: Falk, Urs, Dr.

(57) **Abstract**

A solution for creating customizable software applications by using an object factory and three classifications of operations. The operations are split into actions, business objects, and commands, and are implemented by utilizing an object factory. Actions are created first using the object factory and define how data is to be persisted or relate to the display of a user interface. The actions are then registered by placing keys for each in an action database. It is then determined what business objects are needed to execute the actions, and those business objects are created using the object factory. The business objects are then registered by placing keys for each in a business object factory. Lastly, commands are created as bridges between actions and business objects using the object factory. The commands are then registered by placing keys for each in a command database. Since objects are never instantiated directly, any piece of the action, command, business object chain can be easily replaced by modifying metadata.

## Description

### FIELD OF THE INVENTION

The present invention relates to software application construction. More specifically, the present invention relates to an Action/Command/Business Object framework for constructing software applications.

### BACKGROUND OF THE INVENTION

Due to the unique demands of business computing, it is often typical for business software to be customized for each business to which it is distributed. This is because it is often undesirable to integrate all the business requirements from each client into a single product code line. This can be problematic from several standpoints.

When software is heavily customized, migration to new versions of the software can be challenging. It is not possible to simply update the system with the new code base. Care has to be taken so that custom code is not lost. This extra care translates into increased man-hours, which adds significant cost to software, adversely affecting both customers and manufacturers. Additionally, even if just small mistakes are made, custom code may be irrevocably lost.

Additionally, system customizers are often forced to modify the base code because calls to concrete class implementations are hardwired into the code. Furthermore, in some cases, licensing agreements will not permit the system customizer from accessing the original source codes, forcing the customizer to implement work-arounds. These work-arounds can often make a system's code base unmaintainable as the code can grow outrageously large, with different portions not only created by different programmers, but by different companies.

What is needed is a solution which minimizes or eliminates the problems of customization without losing its benefits.

### BRIEF DESCRIPTION OF THE INVENTION

A solution for creating customizable software applications by using an object factory and three classifications of operations. The operations are split into actions, business objects, and commands, and are implemented by utilizing an object factory. Actions are created first using the object factory and define how data is to be persisted or relate to the display of a user interface. The actions are then registered by placing keys for each in an action database. It is then determined what business objects are needed to execute the actions, and those business objects are created using the object factory. The business objects are then registered by placing keys for each in a business object factory. Lastly, commands are created as bridges between actions and business objects using the object factory. The commands are then registered by placing keys for each in a command database. Since objects are never instantiated directly, any piece of the action, command, business object chain can be easily replaced by modifying metadata.

### BRIEF DESCRIPTION OF THE DRAWINGS

The accompanying drawings, which are incorporated into and constitute a part of this specification, illustrate one or more embodiments of the present invention and, together with the detailed description, serve to explain the principles and implementations of the invention.

In the drawings:
FIG. 1 is a block diagram illustrating an example of the relationship between actions, commands, and business objects in accordance with a specific embodiment of the present invention.
FIG. 2 is a flow diagram illustrating a method for creating a customizable software application in accordance with a specific embodiment of the present invention.
FIG. 3 is a block diagram illustrating an apparatus for creating a customizable software application in accordance with a specific embodiment of the present invention.

### DETAILED DESCRIPTION

Embodiments of the present invention are described herein in the context of a system of computer, servers, communication mechanism, and tags. Those of ordinary skill in the art will realize that the following detailed description of the present invention is illustrative only and is not intended to be in any way limiting. Other embodiments of the present invention will readily suggest themselves to such skilled persons having the benefit of this disclosure. Reference will now be made in detail to implementations of the present invention as illustrated in the accompanying drawings. The same reference indicators will be used throughout the drawings and the following detailed description to refer to the same or like parts.

In the interest of clarity, not all of the routine features of the implementations described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another. Moreover, it will be appreciated that such a development effort might be complex and time-consuming, but would nevertheless be a routine undertaking of engineering for those of ordinary skill in the art having the benefit of this disclosure.

In accordance with the present invention, the components, process steps, and/or data structures may be implemented using various types of operating systems, computing platforms, computer programs, and/or general purpose machines. In addition, those of ordinary skill in the art will recognize that devices of a less general purpose nature, such as hardwired devices, field programmable gate arrays (FPGAs), application specific integrated circuits (ASICs), or the like, may also be used without departing from the scope and spirit of the inventive concepts disclosed herein.

The present invention allows for customization of software applications by splitting each application into three main areas: Action, Commands, and Business Objects. These three main areas may then be modified through the use of a object factory without affecting the core code. The split in functionality along with the data driven object factory approach to object instantiation allows the code base to be highly flexible and customizable, promotes modular reusable code, and solves many of the problem associated with more traditional approaches to system development.

Actions are events where the programmer can define the execution path to perform a particular event. In web-based programs, the actions will likely be defined to perform Hypertext Markup Language (HTML) events. Thus, actions may indicate how the user interface is to react in certain situations, such as what the screen should display if an operation was successful or unsuccessful. Additionally, actions define how the data gathered from users is to be persisted. Furthermore, actions are completely reusable, as they can be used on many different web pages, for example.

For HTML pages, each html event becomes an action. In order to invoke an action from an HTML page, a special name/value pair must be provided in the query string (e.g. ACT = Login, which causes a login action to be invoked). A complete query string may be in the form: http://Paris/ebd/WebDriver?ACT=Login&EID=1

Commands are responsible for data mapping between the weakly typed data passed from actions, and the strongly typed business object. They can package data up in a manner which can be used in the business API or even a Java Server Page. Commands may provide additional formatting for data, invoke methods on business objects, or invoke other commands.

Business objects contain all the business rules to be executed. Additionally, all data is persisted through business objects. The business objects are the aspects of the code that are least likely to be customized (although it is possible to customize them as discussed below). Any customization of the business objects must be undertaken very carefully, as the business objects are designed to be used with varying architectures. Therefore, modifications to business objects are more likely to be generic updates to the program core than customizations.

After the action is defined, the programmer decides what business objects are required to perform the action. Once this is determined, the commands may be created. The commands must be created to map the screen data to the business object and from the business object to the resulting screen

All business objects, commands, and actions are created using an object factory. The object factory may have three main application program interfaces (APIs) for the action, command, and business object categories. If Java Beans is used, the consumer of the class passes a bean containing connection information and a key, which identifies the class to create. In order to make a class available to be created via a factory, the class must be registered with the factory by making an entry in an appropriate database table. A different table may be created for each of the object, command, and business object categories.

Creation of a business object via the object factory involves casting it to an appropriate type. For example:
ObjectExample val5 = (ObjectExample)C1ObjectsFactory.createBO(bn, " ExampleBO "); va15.execute();

The business object database may then be configured as follows:

| **Name** | **Value** |
|---|---|
| ExampleBO | com.commerce.ebd.app.example.business.ObjectExample |

Creation of a command via the factory does not require casting it to the derived type.
For example:
Command val = CIObjectsFactory.createCommand( bn, "ExampleJavaClass");
val.execute( bn );

The command database may then be configured as follows:

| **Name** | **Value** |
|---|---|
| ExampleCommand | com.commerce.ebd.app.example.business.ExampleCommand |

Creation of an action via the factory does not require casting it to the derived type.
For example:
Action val3 = C1ObjectsFactory.createAction(bn, "ExampleJavaClass");
val3.execute(bn );

The action database may then be configured as follows:

| **Name** | **Value** |
|---|---|
| ExampleAction | com.commerce.ebd.app.example.business.ExampleAction |

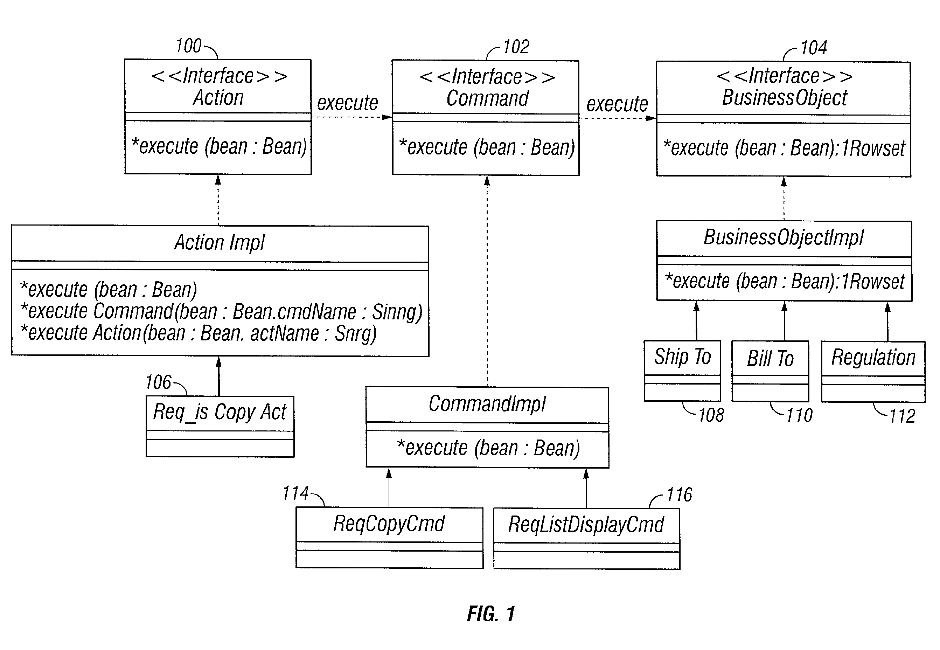

FIG. 1 is a block diagram illustrating an example of the relationship between actions, commands, and business objects in accordance with a specific embodiment of the present invention. Actions 100 instantiate commands 102, and commands 102 instantiate business objects 104. There may be a one-to-many relation from actions to command and from command to business object.

A ReqListCopyAct 106 action copies line items from one requisition to another. The programmer would create this action first. It requires 3 business objects to perform its task. These include ShipTo 108, which contains APIs to access information about companies who are eligible to have items shipped to them, BillTo 110, which contains APIs to access information about companies that are eligible to receive bills, and Requisition 112, which contains APIs that allow a programmer to build, delete, or modify a requisition.

Two commands are then required to map between the actions and business objects. ReqCopyCmd 114 invokes APIs on the requisition business object 112 to copy line items from one requisition to another, and ReqListDisplayCMD 116 invokes APIs on the requisition business object 112 to get details about a particular requisition and invokes APIs on the BillTo 110 and ShipTo 108 business objects to obtain address information.

If the programmer wishes to customize the software, for example add additional information to the Requisition List page (the page on which the ReqListCopyAct is exposed), a new command may be written called ReqListDisplayCmd2. The ReqListDisplayCmd2 command would make additional API calls to other business objects to obtain the new information (e.g. Contact Info class). As long as the new command adheres to the command interface, no other coding changes have to be made other than the screen code. The programmer simply installs the class into the system and modifies the metadata. For example, the meta-data would change from:

| **Name** | **Value** |
|---|---|
| ExampleCommand | com.commerce.ebd.app.req.command.ReqListDisplayCmd |

to:

| **Name** | **Value** |
|---|---|
| ExampleCommand | com.commerce.ebd.app.req.command.ReqListDisplayCmd2 |

Since objects are never instantiated directly, any piece of the Action, Command, Business Object chain can be replaced by modifying metadata. If overriding behavior is desired in a particular component the core code does not need to be modified nor does the source code have to be available to the system customizer The programmer need only write an overriding class that adheres to a particular interface and change the meta data to point to the new implementation.

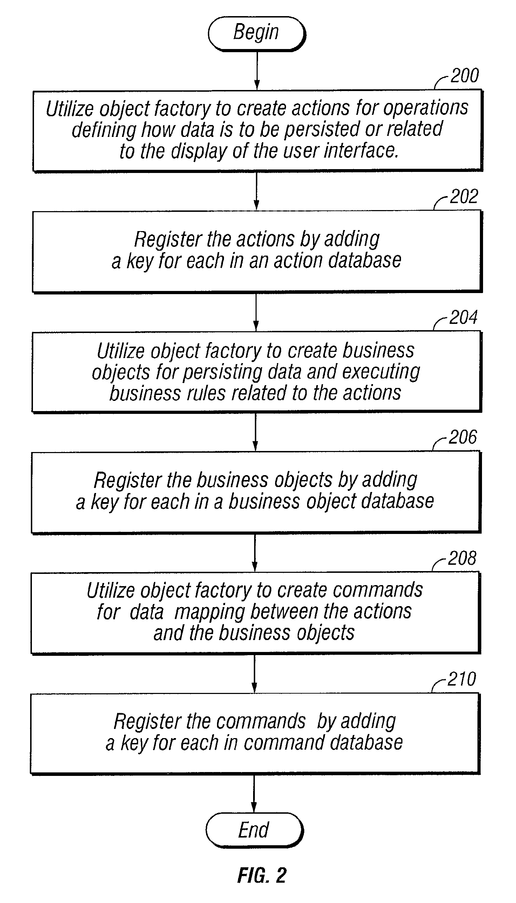

FIG. 2 is a flow diagram illustrating a method for creating a customizable software application in accordance with a specific embodiment of the present invention. At 200, an object factory is utilized to create actions for operations defining how data is to be persisted or related to the display of the user interface. At 202, the actions may be registered by adding a key for each in an action database. At 204, the object factory is utilized to create business objects for persisting data and executing business rules related to the actions. At 206, the business objects may be registered by adding a key for each in a business object database. At 208, the object factory is utilized to create commands for data mapping between the actions and the business objects. At 210, the commands are registered by adding a key for each in a command database.

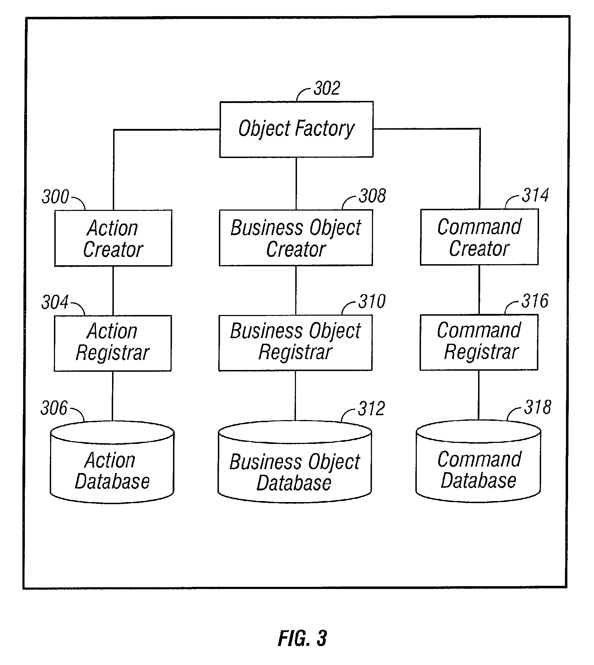

FIG. 3 is a block diagram illustrating an apparatus for creating a customizable software application in accordance with a specific embodiment of the present invention. An action creator 300 utilizes a connected object factory 302 to create actions for operations defining how data is to be persisted or related to the display of the user interface. An action registrar 304 coupled to the action creator 300 then registers the actions by adding a key for each in an action database 306 coupled to the action registrar 304. A business object creator 308 utilizes the connected object factory 302 to create business objects for persisting data and executing business rules related to the actions. A business object registrar 310 coupled to the business object creator 308 then registers the business objects by adding a key for each in a business object database 312 coupled to the business object registrar 310. A command creator 314 utilizes the connected object factory 302 to create commands for data mapping between the actions and the business objects. A command registrar 316 coupled to the command object creator 314 then registers the commands by adding a key for each in a command database 318 coupled to the command registrar 316.

Examples of code demonstrating the object factory approach to object creation are provided. These examples are merely illustrative and should not be read to be limiting in any way.

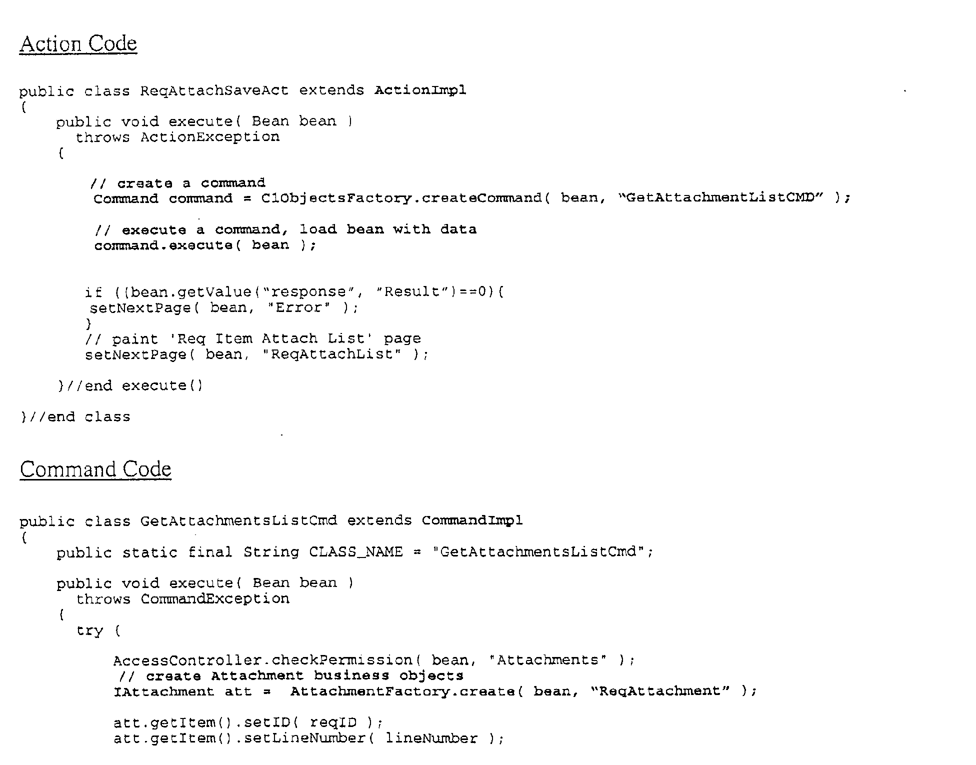

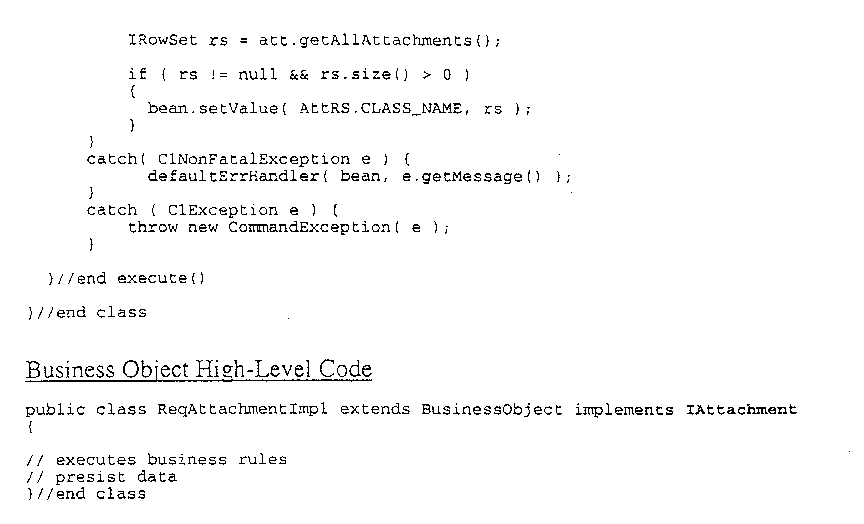

While embodiments and applications of this invention have been shown and described, it would be apparent to those skilled in the art having the benefit of this disclosure that many more modifications than mentioned above are possible without departing from the inventive concepts herein. The invention, therefore, is not to be restricted except in the spirit of the appended claims.

## Claims

1. A method for creating a customizable software application including:
utilizing an object factory to create actions for operations defining how data is to be persisted or related to the display of a user interface;
registering said actions by adding a key for each of said actions in an action database;
utilizing said object factory to create business objects for persisting data and executing business rules related to said actions;
registering said business objects by adding a key for each in a business object database;
utilizing said object factory to create commands for data mapping between the actions and the business objects; and
registering said commands by adding a key for each in a command database.

2. The method of claim 1, wherein said actions are events where a programmer defines an execution path to define a particular event.

3. The method of claim 2, wherein said actions indicate how a user interface is to react in certain situations.

4. The method of claim 2, wherein said actions indicate how data gathered from one or more users is to be persisted.

5. The method of claim 1, wherein the customizable software application is used for creating and displaying Hypertext Markup Language (HTML) pages.

6. The method of claim 5, wherein one or more HTML events are defined, and each of said one or more HTML events is an action.

7. An apparatus for creating a customizable software application including:
an object factory;
an action creator coupled to said object factory;
a business object creator coupled to said object factory;
a command creator coupled to said object factory;
an action registrar coupled to said action creator;
a business object registrar coupled to said business object creator;
a command registrar coupled to said command creator;
an action database coupled to said action registrar;
a business object database coupled to said business object registrar; and
a command database coupled to said command registrar.

8. An apparatus for creating a customizable software application including:
means for utilizing an object factory to create actions for operations defining how data is to be persisted or related to the display of a user interface;
means for registering said actions by adding a key for each of said actions in an action database;
means for utilizing said object factory to create business objects for persisting data and executing business rules related to said actions;
means for registering said business objects by adding a key for each in a business object database;
means for utilizing said object factory to create commands for data mapping between the actions and the business objects; and
means for registering said commands by adding a key for each in a command database.

9. The apparatus of claim 8, wherein said actions are events where a programmer defines an execution path to define a particular event.

10. The apparatus of claim 9, wherein said actions indicate how a user interface is to react in certain situations.

11. The apparatus of claim 9, wherein said actions indicate how data gathered from one or more users is to be persisted.

12. The apparatus of claim 8, wherein the customizable software application is used for creating and displaying Hypertext Markup Language (HTML) pages.

13. The apparatus of claim 12, wherein one or more HTML events are defined, and each of said one or more HTML events is an action.

14. A program storage device readable by a machine, tangibly embodying a program of instructions executable by the machine to perform a method for creating a customizable software application, the method including:
utilizing an object factory to create actions for operations defining how data is to be persisted or related to the display of a user interface;
registering said actions by adding a key for each of said actions in an action database;
utilizing said object factory to create business objects for persisting data and executing business rules related to said actions;
registering said business objects by adding a key for each in a business object database;
utilizing said object factory to create commands for data mapping between the actions and the business objects; and
registering said commands by adding a key for each in a command database.
